(19) Europäisches Patentamt
European Patent Office
Office européen des brevets

(11) EP 2 407 800 B1

(12) **EUROPEAN PATENT SPECIFICATION**

(45) Date of publication and mention
of the grant of the patent:
**12.09.2012 Bulletin 2012/37**

(51) Int Cl.:
***G01S 13/94*** *(2006.01)*   ***G01C 5/00*** *(2006.01)*

(21) Application number: **11172032.2**

(22) Date of filing: **29.06.2011**

(54) **Systems and methods of altitude determination**

Systeme und Verfahren zur Höhenbestimmung

Systèmes et procédés de détermination d'altitude

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2010 US 837339**

(43) Date of publication of application:
**18.01.2012 Bulletin 2012/03**

(73) Proprietor: **Honeywell International, Inc.**
**Morristown, New Jersey 07962-2245 (US)**

(72) Inventors:
• **Krishnamurthy, Rupa Bhavani**
**Morristown, New Jersey 07962-2245 (US)**

• **Kumble, Nainatara**
**Morristown, New Jersey 07962-2245 (US)**

(74) Representative: **Buckley, Guy Julian**
**Patent Outsourcing Limited**
**1 King Street**
**Bakewell**
**Derbyshire DE45 1DZ (GB)**

(56) References cited:
**US-A- 5 136 512**   **US-A1- 2005 007 270**
**US-A1- 2008 103 691**   **US-B1- 6 216 064**

## Description

## BACKGROUND OF THE INVENTION

The leading cause of worldwide aviation fatalities comes from inadvertently flying a perfectly operating aircraft into ground or water. This type of accident is referred to as Controlled Flight into Terrain (CFIT). Common causes of CFIT accidents are due to loss of radio altimeter altitude input to the enhanced ground proximity warning system (EGPWS). Altitude information from the radio altimeter (RA) is one of the critical inputs to derive the geometric altitude for EGPWS. An approach to calculation of geometric altitude is described in commonly owned U.S. Patent No. 6,216,064.

Geometric Altitude uses an improved pressure altitude calculation, GPS Altitude, Radio Altitude, and Terrain and Runway elevation data to reduce or eliminate errors potentially induced in Corrected Barometric Altitude by temperature extremes, non-standard altitude conditions, and altimeter mis-sets. The final Geometric Altitude is computed by combining the three computed component altitudes with optional Corrected Barometric altitude. The weighting of each altitude in the final solution is based on the corresponding estimated (vertical figure of merit) VFOM. The blending algorithm gives the most weight to altitudes with a higher estimated accuracy, reducing the effect of less accurate altitudes on the final computed altitude. Each component altitude is also checked for reasonableness using a window monitor computed from GPS Altitude and GPS VFOM. Altitudes that are invalid, not available, or fall outside the reasonableness window are not included in the final blended altitude.

Radio Altitude Calibrated Altitude is a calibration of Non-Standard Altitude during approach using an altitude derived from radio altitude (height above terrain) and the terrain elevation data stored in the EGPWS terrain database. This calibration is performed during the approach phase of flight when the aircraft is within a minimum distance and elevation of any runway. Once a correction factor is determined, it is applied to Non-Standard Altitude (or Standard Altitude) until the aircraft lands.

In the event of RA failure, or failure of any other instrument providing altitude information, the determination of geometric altitude is severely compromised. US 5136512 discloses a method and system for avoiding ground collision through pilot warning messages implemented in an aircraft having a plurality of sensors including inertial navigation and altimeters for measuring aircraft performance characteristics. US2008/0103691 discloses a spatial data search method, system and apparatus for identifying data of significance around a reference vector through spatial data.

## Summary of the Invention

The present invention in its various aspects is as set out in the appended claims. In an embodiment, a system includes a memory device, and a processor coupled to the memory device. The processor is configured to receive, in a first time interval, from a first component a signal indicating an altitude of the aircraft, from a second component a signal indicating a first heading of the aircraft, and from a third component a signal indicating a first position of the aircraft. The processor is further configured to receive, in a second time interval later than the first time interval, and from the second and third components, signals respectively indicating a second heading and second position of the aircraft. The processor does not receive a signal from the first component in the second time interval. The processor is further configured to determine an estimated altitude of the aircraft and a geometric altitude of the aircraft.

## BRIEF DESCRIPTION OF THE DRAWINGS

Preferred and alternative embodiments of the present invention are described in detail below with reference to the following drawings.

FIG. 1 illustrates elements of an exemplary system formed in accordance with an embodiment of the present invention;

FIGS. 2-4 illustrate a process according to an embodiment of the invention;

FIG. 5 conceptually illustrates the functionality of a memory device according to an embodiment; and

FIGS. 6-9 illustrate altitude prediction according to an embodiment.

## DETAILED DESCRIPTION OF THE PREFERRED EMBODIMENT

An embodiment of the invention is directed towards prediction of the aircraft altitude in the event of failure of RA, or loss of altitude information from any other sensor, serving as input to calculate the Geometric Altitude for EGPWS using the blending algorithm and continue providing this information to EGPWS until VFR (visual flight rules) condition is reached during the approach phase and until the operational range limit of the RA during climb-out phases of flight is reached.

An embodiment of the invention is directed towards an Altitude Prediction approach for estimating and predicting the aircraft altitude to the TA&D function of the EGPWS by maintaining the integrity of the existing blending algorithm to calculate the Geometric Altitude for the EGPWS. Unlike conventional approaches, an embodiment accrues and stores the predicted altitude information. This altitude data is 'volumetric' or 'three-dimensional,' because it is built from and constantly updated by systematic calculation of predicted height information in the area in front of the airplane over the flight path angle.

An embodiment of the invention computationally "builds" the equivalent of a cuboid in space in front of the airplane. The present position of the aircraft is stored in a 3-D buffer, so that this information can be used to calculate the predicted position over a range of two voxels, for example, apart along the flight path angle. The predicted positions / altitude information are stored in the 3-D buffer continuously. In the event of system failure of Radio Altimeter or any other sensor input to the blending algorithm, the information is extracted from this buffer and replenished as an input to computation of RA Calibrated Altitude, or similar corresponding input. The altitude information stored in the buffer is not only extracted and provided to EGPWS but also may be used to calculate the subsequent altitude information/aircraft position with respect to the cells in the buffer based on the flight path angle with a high degree of accuracy. During the critical approach phase this information continues to be provided to the EGPWS until the Decision height or conditions for a VFR approach is reached.

An embodiment of the invention can be yet another mode of EGPWS. For example, the activation of this mode can be based on the RA failure (or any other sensor failure). The EGPWS can indicate this failure with the usual RED indicator lamp. There could be the sounding of a caution alarm as "Radio Altimeter failure" (or any other corresponding sensor failure) so that the pilot remains in auto-pilot mode or can stay on the flight plan course with as little deviation as possible. Such would result in accurate prediction of RA information from the 3-D Buffer prediction approach discussed herein. However, if there is still a deviation in the flight course from the stored flight plan, the heading information from an inertial navigation system (INS) could be used, as well.

Embodiments of the invention may be described in the general context of computer-executable instructions, such as program modules, being executed by a computer and/or by computer-readable media on which such instructions or modules can be stored. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

According to one or more embodiments, the combination of software or computer-executable instructions with a computer-readable medium results in the creation of a machine or apparatus. Similarly, the execution of software or computer-executable instructions by a processing device results in the creation of a machine or apparatus, which may be distinguishable from the processing device, itself, according to an embodiment.

Correspondingly, it is to be understood that a computer-readable medium is transformed by storing software or computer-executable instructions thereon.

Likewise, a processing device is transformed in the course of executing software or computer-executable instructions. Additionally, it is to be understood that a first set of data input to a processing device during, or otherwise in association with, the execution of software or computer-executable instructions by the processing device is transformed into a second set of data as a consequence of such execution. This second data set may subsequently be stored, displayed, or otherwise communicated. Such transformation, alluded to in each of the above examples, may be a consequence of, or otherwise involve, the physical alteration of portions of a computer-readable medium. Such transformation, alluded to in each of the above examples, may also be a consequence of, or otherwise involve, the physical alteration of, for example, the states of registers and/or counters associated with a processing device during execution of software or computer-executable instructions by the processing device.

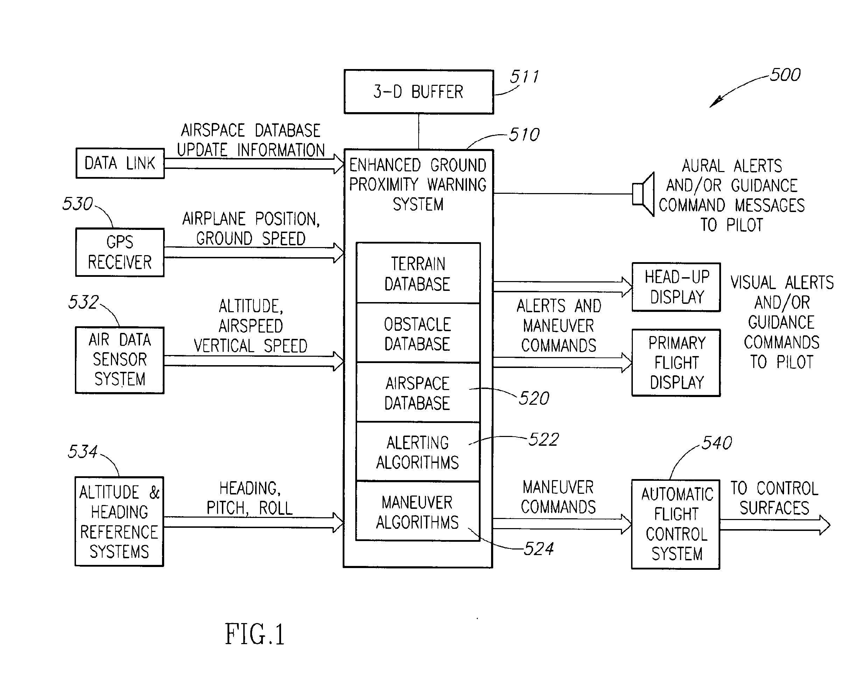

FIG. 1 illustrates an example of a suitable operating environment in which the invention may be implemented. The operating environment is only one example of a suitable operating environment and is not intended to suggest any limitation as to the scope of use or functionality of the invention. The operating environment may include or be a component of a three-dimensional buffer processing system, such as the RDR-4000 weather radar system manufactured by Honeywell®, including its volumetric buffer technology. Other well known computing systems, environments, and/or configurations that may be suitable for use with the invention include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like.

The operating environment illustrated in FIG. 1 typically includes at least some form of computer readable media. Computer readable media can be any available media that can be accessed by one or more components of such operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by one or more components of such operating environment. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

FIG. 1 illustrates a system 500 that includes a processing device, such as an EGPWS 510, which in turn includes a database 520, an alerting algorithm component 522, and a maneuvering algorithm component 524. EGPWS 510 may include or be otherwise coupled to a 3-D buffer memory device 511. The database 520 includes geographic locations and horizontal and vertical extents of local protected airspace. The EGPWS 510 interfaces with airplane systems 530, 532 and 534 to provide knowledge of the airplane position (latitude, longitude, altitude), horizontal velocity, vertical velocity (or flight path angle) and track angle. The system 532 may include, for example, a radio altimeter (not shown). Additionally, if guidance commands are desired, knowledge of airplane pitch attitude, roll attitude and heading may be required.

The alerting algorithm component 522 determines if the airplane is predicted to encroach on any protected airspace volume. The EGPWS 510 includes an aural message generator that provides audible information to the pilot after the alerting algorithm component 522 determined that there is imminent conflict with a protected airspace. The maneuvering algorithm component 524 generates guidance commands for output to the pilot or an automatic flight control system 540 for avoiding the protected airspace.

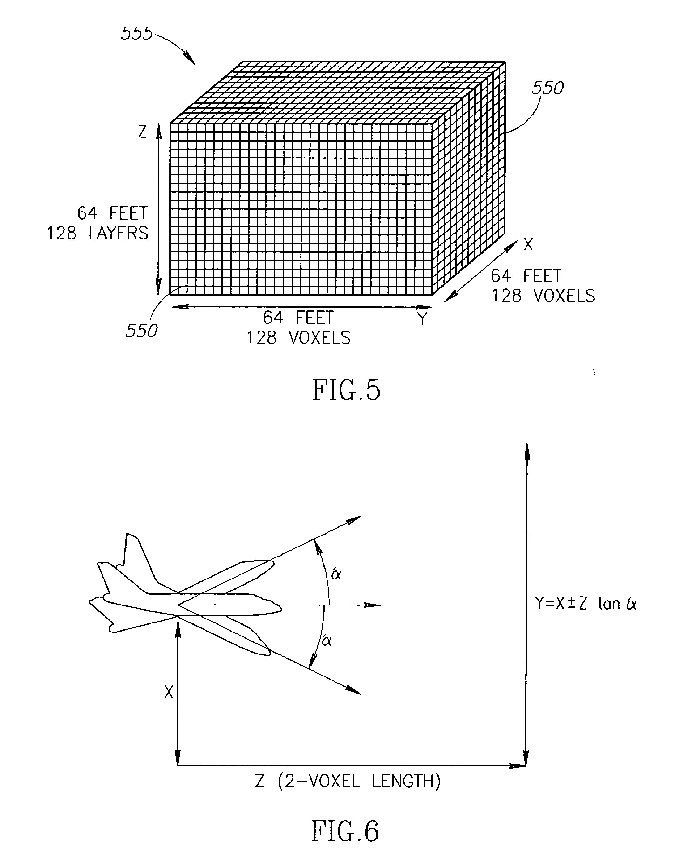

FIG. 5 illustrates conceptually the functionality of the memory device 511 according to an embodiment. A 3-D memory (volumetric elevation buffer) is constructed in which memory is allocated in the form of cells 550, also called "voxels," in logical 3-dimensional x, y and z planes, thereby enabling performance of a "look-ahead algorithm" by EGPWS 510 during take-off / approach. The 3-D buffer 511 allocates memory in a manner that conceptually forms a cuboid 555 in front of the aircraft constructed of the cube-shaped voxels 550. At any point of time, the aircraft position may be considered to be at the first cell along the x plane and at corresponding positional co-ordinates in the y and z planes. The y and z positions may be according to the information received from EGPWS 510.

Each voxel 550 is a perfect cube. The x and y planes are 128 voxels 550 in length, in an embodiment, although more or fewer such voxels may be used, as appropriate. The division of 64 feet, in an embodiment, by 128 voxels provides a voxel size of 0.5 feet in the x and y planes. Consequently, each voxel 550 is 0.5 feet in length in the z plane. In the illustrated embodiment, 128 layers of voxels 550 are included in the z plane. As discussed in further detail below, this 3-dimensional cuboid 555 is continuously logically "moved" correspondingly to movement of the aircraft.

The dimensions of the voxels 550 can be altered as per the size of the cell of the digital terrain elevation database stored in EGPWS, provided sufficient accuracy as that of RA is still achieved.

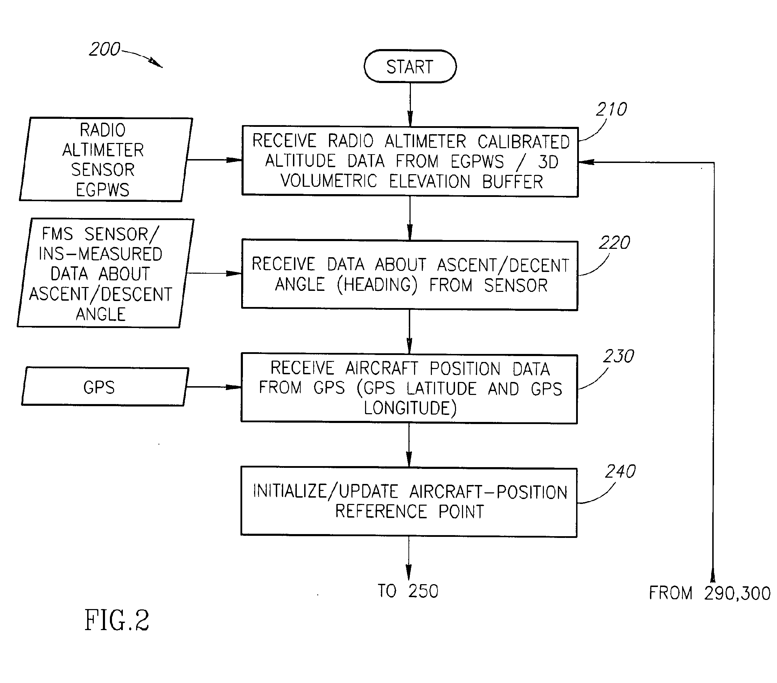

FIGS. 2-4 illustrate a process 200 according to an embodiment of the invention. The process 200 is illustrated as a set of operations shown as discrete blocks. The process 200 may be implemented in any suitable hardware, software, firmware, or combination thereof. The order in which the operations are described is not to be necessarily construed as a limitation.

Referring to FIG. 2, at a block 210, radio altimeter calibrated altitude data is received and/or generated by EGPWS 510. As will be discussed in further detail, if the RA is functioning, this data will be based on data received from the RA. Otherwise, such data will be based on data generated by EGPWS 510 using the 3-D buffer 511.

At a block 220, EGPWS 510 receives heading information, including ascent/descent angle, from system 534. As above alluded to, if the aircraft is on the flight plan course, data from a flight management system (FMS) may be used. Otherwise, the heading information supplied by an INS may be used.

At a block 230, EGPWS 510 receives aircraft position data, including aircraft longitude/latitude, from system 530.

At a block 240, the data received in blocks 210-230 is used to initialize or update, as appropriate, a reference point defining the current position of the aircraft relative to previously determined aircraft positions and predicted aircraft positions as stored in the 3-D buffer 511.

As discussed above, the cuboid 555 generated by buffer 511 is considered to be dynamically moving along with the motion of the aircraft at all times in accordance with motion-compensation techniques. To perform motion compensation accurately, the total aircraft displacement from a chosen frame of reference should be tracked constantly, including during turn-around times. The inputs to aircraft position integration may be heading (radians), drift angle (radians), delta time to the last reported aircraft position (seconds), ground speed (meters/second), and data indicating previous aircraft position (reference point).

Aircraft position integration may be initialized by "marking" the position of the aircraft by initializing an object called a reference point. Reference points accumulate as the aircraft moves from the position at which the reference points were initialized. Reference points track $\Delta x$ displacement (left/right), $\Delta y$ displacement (for-

ward/rear), and record the aircraft heading (radians) at the time of initialization. The output of the aircraft position integration may be Δx - relative displacement of aircraft (left/right), Δy - relative displacement of aircraft (forward/back), Δh - relative difference in heading (radians), and an updated reference point containing the updated Δx and Δy.

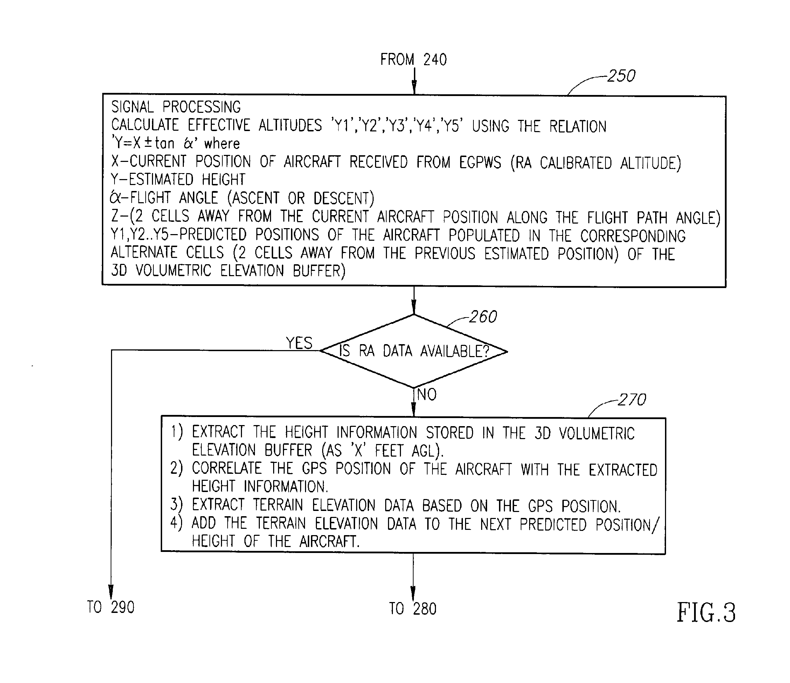

Referring now to FIG. 3, at a block 250, EGPWS 510 calculates predicted heights of the aircraft along predetermined incremental distances along the current flight path and populates cells of the 3-D buffer 511 with the predicted heights.

For example, Y1, Y2, Y3, Y4, Y5 may represent successive predicted positions of the aircraft populating corresponding alternate cells (e.g., 2 voxels away from a prior estimated position) of the cuboid 555. These predicted heights may be calculated using the current position "X" determined with reference to the cuboid 555. The following equations provide a first estimated height "Y1," a second estimated height "Y2," *etc.* Note that these predicted heights may be a function of Δx, Δy and Δh as determined using the above-described motion-compensation techniques:

$$Y1 = X \pm (Z \pm \Delta y) \tan (\acute{\alpha} \pm \Delta h),$$

$$Y2 = Y1 \pm (Z \pm \Delta y) \tan (\acute{\alpha} \pm \Delta h),$$

$$Y3 = Y2 \pm (Z \pm \Delta y) \tan (\acute{\alpha} \pm \Delta h),$$

$$Y4 = Y3 \pm (Z \pm \Delta y) \tan (\acute{\alpha} \pm \Delta h),$$

$$Y5 = Y4 \pm (Z \pm \Delta y) \tan (\acute{\alpha} \pm \Delta h),$$

where, Z is the distance, in an embodiment, two cells away from the current aircraft position along the flight path angle $\acute{\alpha}$.

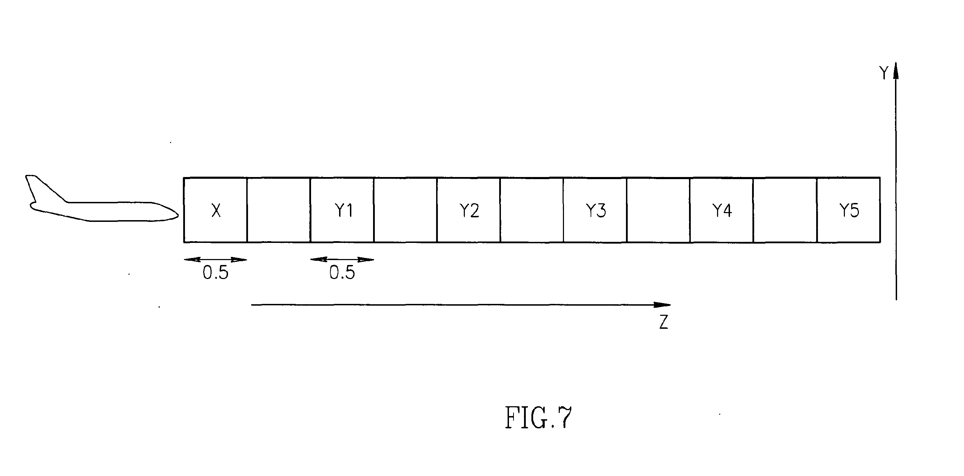

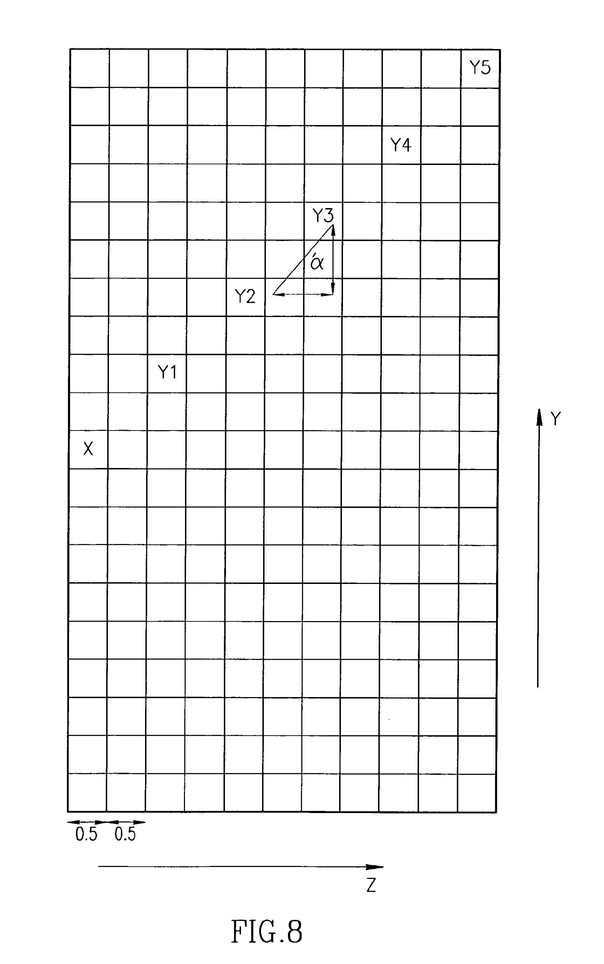

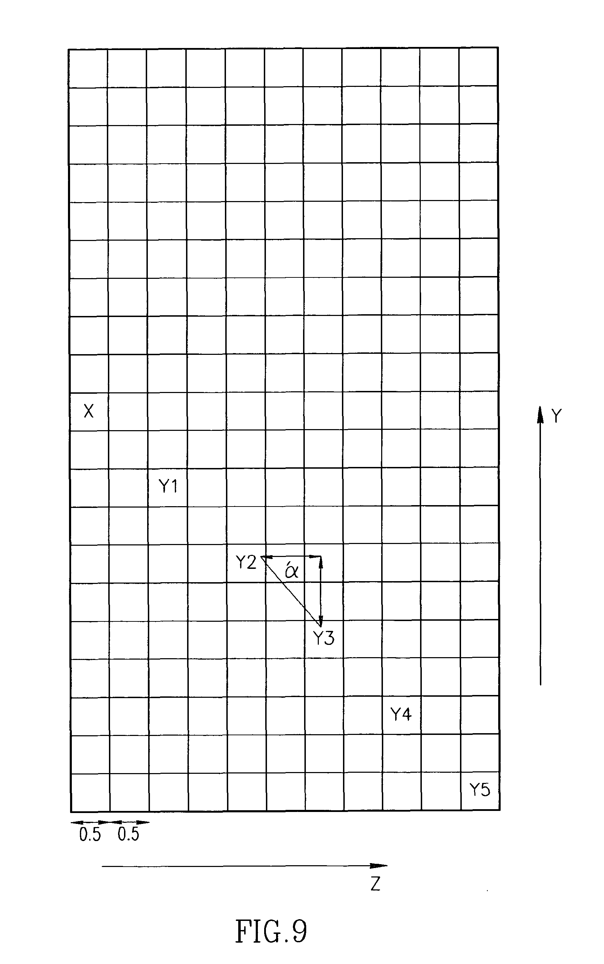

FIG. 6 graphically illustrates components involved in these calculations. FIG. 7 illustrates altitude prediction, according to an embodiment, as a consequence of a level aircraft flight path and as may be arranged in layers of the cuboid 555. FIG. 8 illustrates altitude prediction, according to an embodiment, as a consequence of an ascending aircraft flight path and as may be arranged in layers of the cuboid 555. FIG. 9 illustrates altitude prediction, according to an embodiment, as a consequence of a descending aircraft flight path and as may be arranged in layers of the cuboid 555.

At a block 260, EGPWS 510 determines whether data is available from the RA (or other applicable altitude sensor). If such data is available, then the process 200 moves to block 290. Otherwise, the process moves to block 270.

At block 270, EGPWS 510 determines predicted radio altitude calibrated altitudes (RACAs) for use in determining predicted geometric altitudes of the aircraft. The RACAs may be determined by correlating the GPS position of the aircraft with the predicted heights stored in 3-D buffer 511, accessing terrain elevation data stored in the Terrain Database and correlated with the GPS position, and adding the terrain elevation data to the stored predicted heights.

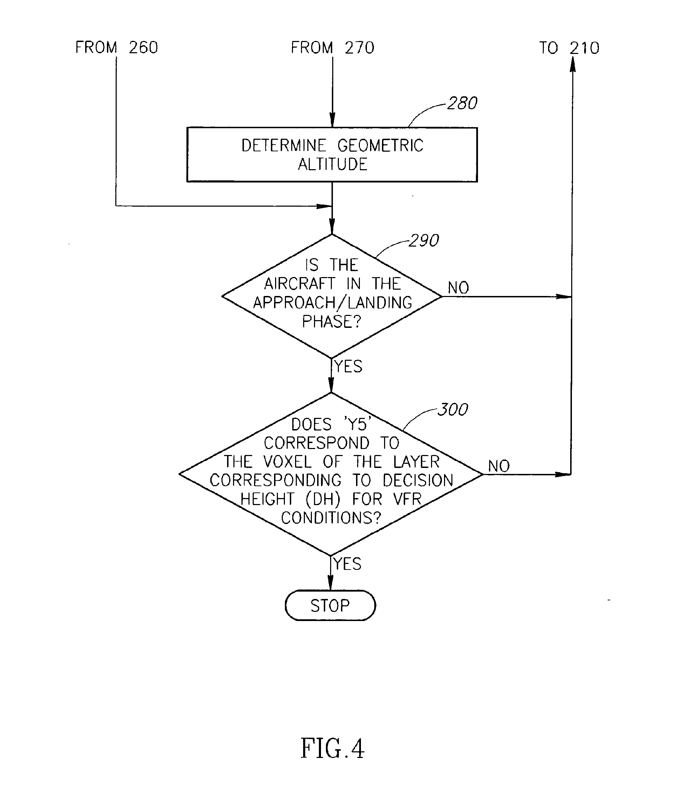

Referring now to FIG. 4, at a block 280, EGPWS 510 uses the RACAs to determine predicted geometric altitudes of the aircraft.

At block 290, EGPWS 510 determines whether the aircraft is in the approach/landing phase of flight. If the aircraft is in the approach/landing phase of flight, then the process 200 moves to block 300. Otherwise, the process 200 moves back to block 210.

At block 300, EGPWS 510 determines whether the most-extended predicted height (e.g., Y5) is associated with a voxel of a layer in the 3-D buffer 511 corresponding to a decision height for VFR conditions. If so, then the process 200 ends. Otherwise, the process 200 moves back to block 210.

The embodiments of the invention in which an exclusive property or privilege is claimed are defined as follows:

**Claims**

1. A method comprising:

receiving, in a first time interval, from a first component a signal indicating an altitude of the aircraft (210);
receiving, in the first time interval, from a second component a signal indicating a first heading of the aircraft (220);
receiving, in the first time interval, from a third component a signal indicating a first position of the aircraft (230);
receiving, in a second time interval later than the first time interval, from the second and third components signals respectively indicating a second heading and second position of the aircraft, wherein a signal from the first component is not received in the second time interval (240);
determining (280), based on the signals received in the second time interval, an estimated altitude of the aircraft; and
determining, based on the estimated altitude, a geometric altitude of the aircraft

chracterised in, further comprising:

determining, based on the signals received from the second and third components, multiple predicted altitudes of the aircraft corresponding to multiple different positions of the aircraft along a flight path of the aircraft, the estimated altitude being based on one or more of the predicted altitudes;
updating, at a predetermined time frequency, values of the predicted altitudes; and
storing the values of the predicted altitudes in a memory device,
wherein the memory device comprises a three-dimensional buffer,
wherein the first component comprises a radio altimeter.

2. The method of Claim 1, wherein the predicted altitudes are determined based on the formula:

$$Y=X \pm Z \tan \acute{\alpha}$$

where:

Y is the predicted altitude;
X is the estimated current altitude;
$\acute{\alpha}$ is the aircraft flight angle; and
Z is a predetermined distance from the current aircraft position along the flight angle.

3. The method of Claim 1, wherein determining the estimated altitude comprises:

correlating at least one of the predicted altitudes with the second aircraft position;
accessing terrain-elevation data corresponding to the second aircraft position; and
adding the terrain-elevation data to the at least one predicted altitude.

4. The method of Claim 1, wherein:

the aircraft has an associated stored flight plan;
if the aircraft is traveling according to the flight plan, then the second component comprises a flight management system; and
if the aircraft is not traveling according to the flight plan, then the second component comprises an inertial navigation system.

5. A system configured to be implemented aboard an aircraft, the system comprising:

a memory device (511); and
a processor (510) coupled to the memory device, the processor configured to:

receive, in a first time interval, from a first component a signal indicating an altitude of the aircraft (210),
receive, in the first time interval, from a second component a signal indicating a first heading of the aircraft (220),
receive, in the first time interval, from a third component a signal indicating a first position of the aircraft (230),
receive, in a second time interval later than the first time interval, from the second and third components signals respectively indicating a second heading and second position of the aircraft, wherein a signal from the first component is not received in the second time interval (240),
determine, based on the signals received in the second time interval, an estimated altitude of the aircraft, and
determine (280), based on the estimated altitude, a geometric altitude of the aircraft **characterised in that** the processor (510) is further configured to determine, based on the signals received from the second and third components, multiple predicted altitudes of the aircraft corresponding to multiple different positions of the aircraft along a flight path of the aircraft, the estimated altitude being based on one or more of the predicted altitudes, wherein the processor is further configured to:

update, at a predetermined time frequency, values of the predicted altitudes; and
store the values of the predicted altitudes in the memory device and, wherein the memory device comprises a three-dimensional buffer, wherein the first component comprises a radio altimeter.

6. The system of Claim 5, wherein the predicted altitudes are determined based on the formula:

$$Y=X \pm Z \tan \acute{\alpha}$$

where:

Y is the predicted altitude;
X is the estimated current altitude;
$\acute{\alpha}$ is the aircraft flight angle; and
Z is a predetermined distance from the current aircraft position along the flight angle.

7. The system of Claim 5, further comprising a database coupled to the memory device, the database including a set of terrain data representing fixed landmarks associated with at least one geographic region, and wherein determining the estimated altitude comprises:

correlating at least one of the predicted altitudes with the second aircraft position;
accessing from the database terrain-elevation data corresponding to the second aircraft position; and
adding the terrain-elevation data to the at least one predicted altitude,
wherein the aircraft has an associated stored flight plan,
wherein if the aircraft is traveling according to the flight plan, then the second component comprises a flight management system,
wherein if the aircraft is not traveling according to the flight plan, then the second component comprises an inertial navigation system.

**Patentansprüche**

1. Verfahren, umfassend:

Empfangen, in einem ersten Zeitintervall, eines Signals, das eine Höhe eines Luftfahrzeugs angibt, von einer ersten Komponente (210);
Empfangen, in dem ersten Zeitintervall, eines Signals, das einen ersten Steuerkurs des Luftfahrzeugs angibt, von einer zweiten Komponente (220);
Empfangen, in dem ersten Zeitintervall, eines Signals, das eine erste Position des Luftfahrzeugs angibt, von einer dritten Komponente (230);
Empfangen, in einem zweiten Zeitintervall, das später ist als das erste Zeitintervall, von Signalen, die jeweils einen zweiten Steuerkurs und eine zweite Position des Luftfahrzeugs angeben, von der zweiten und dritten Komponente, wobei ein Signal von der ersten Komponente nicht in dem zweiten Zeitintervall empfangen wird (240);
Bestimmen (280), basierend auf den in dem zweiten Zeitintervall empfangenen Signalen, einer geschätzten Höhe des Luftfahrzeugs; und
Bestimmen, basierend auf der geschätzten Höhe, einer geometrischen Höhe des Luftfahrzeugs,

**dadurch gekennzeichnet, dass** es weiter umfasst:

Bestimmen, basierend auf den von der zweiten und dritten Komponente empfangenen Signalen, mehrerer prognostizierter Höhen des Luftfahrzeugs korrespondierend mit mehreren verschiedenen Positionen des Luftfahrzeugs entlang eines Flugwegs des Luftfahrzeugs, wobei die geschätzte Höhe auf einer oder mehreren der prognostizierten Höhen basiert ist;
Aktualisieren, zu einer im Voraus bestimmten Taktfrequenz, der Werte der prognostizierten Höhen; und
Speichern der Werte der prognostizierten Höhen in einer Speichervorrichtung,
wobei die Speichervorrichtung einen dreidimensionalen Puffer umfasst,
wobei die erste Komponente einen Funkhöhenmesser umfasst.

2. Verfahren nach Anspruch 1, wobei die prognostizierten Höhen basierend auf der folgenden Formel bestimmt werden:

$$Y = X \pm Z \tan \acute{\alpha}$$

wobei:

Y die prognostizierte Höhe ist;
X die geschätzte gegenwärtige Höhe ist;
$\acute{\alpha}$ der Flugwinkel des Luftfahrzeugs ist; und
Z eine im Voraus bestimmte Distanz von der gegenwärtigen Luftfahrzeugposition entlang dem Flugwinkel ist.

3. Verfahren nach Anspruch 1, wobei Bestimmen der geschätzten Höhe umfasst:

Korrelieren mindestens einer der prognostizierten Höhen mit der zweiten Luftfahrzeugposition;
Zugreifen auf Geländehöhendaten korrespondierend mit der zweiten Luftfahrzeugposition; und
Addieren der Geländehöhendaten zu der mindestens einen prognostizierten Höhe.

4. Verfahren nach Anspruch 1, wobei:

das Luftfahrzeug über einen assoziierten gespeicherten Flugplan verfügt;
wenn das Luftfahrzeug sich gemäß dem Flugplan fortbewegt, die zweite Komponente dann ein Flugmanagementsystem umfasst; und
wenn das Luftfahrzeug sich nicht gemäß dem Flugplan fortbewegt, die zweite Komponente dann ein Trägheitsnavigationssystem umfasst.

5. System, das konfiguriert ist, um an Bord eines Luftfahrzeugs implementiert zu werden, das System umfassend:

eine Speichervorrichtung (511); und
einen Prozessor (510), der an die Speichervorrichtung gekoppelt ist, der Prozessor konfiguriert zum:

Empfangen, in einem ersten Zeitintervall, eines Signals, das eine Höhe des Luftfahrzeugs angibt, von einer ersten Komponente (210);

Empfangen, in dem ersten Zeitintervall, eines Signals, das einen ersten Steuerkurs des Luftfahrzeugs angibt, von einer zweiten Komponente (220);

Empfangen, in dem ersten Zeitintervall, eines Signals, das eine erste Position des Luftfahrzeugs angibt, von einer dritten Komponente (230);

Empfangen, in einem zweiten Zeitintervall, das später ist als das erste Zeitintervall, von Signalen, die jeweils einen zweiten Steuerkurs und eine zweite Position des Luftfahrzeugs angeben, von der zweiten und dritten Komponente, wobei ein Signal von der ersten Komponente nicht in dem zweiten Zeitintervall empfangen wird (240);

Bestimmen, basierend auf den in dem zweiten Zeitintervall, empfangenen Signalen, einer geschätzten Höhe des Luftfahrzeugs; und

Bestimmen (280), basierend auf der geschätzten Höhe, einer geometrischen Höhe des Luftfahrzeugs,

**dadurch gekennzeichnet, dass** der Prozessor (510) weiter konfiguriert ist zum Bestimmen, basierend auf den von der zweiten und dritten Komponente empfangenen Signalen, mehrerer prognostizierter Höhen des Luftfahrzeugs korrespondierend mit mehreren verschiedenen Positionen des Luftfahrzeugs entlang eines Flugwegs des Luftfahrzeugs, wobei die geschätzte Höhe auf einer oder mehreren der prognostizierten Höhen basiert ist, wobei der Prozessor weiter konfiguriert ist zum:

Aktualisieren, bei einer im Voraus bestimmten Taktfrequenz, der Werte der prognostizierten Höhen; und

Speichern der Werte der prognostizierten Höhen in der Speichervorrichtung,

und wobei die Speichervorrichtung einen dreidimensionalen Puffer umfasst, wobei die erste Komponente einen Funkhöhenmesser umfasst.

6. System nach Anspruch 5, wobei die prognostizierten Höhen basierend auf der folgenden Formel bestimmt werden:

$$Y = X \pm Z \tan \acute{\alpha}$$

wobei:

Y die prognostizierte Höhe ist;

X die geschätzte gegenwärtige Höhe ist;

$\acute{\alpha}$ der Flugwinkel des Luftfahrzeugs ist; und

Z eine im Voraus bestimmte Distanz von der gegenwärtigen Luftfahrzeugposition entlang dem Flugwinkel ist.

7. System nach Anspruch 5, weiter umfassend eine an die Speichervorrichtung gekoppelte Datenbank, die Datenbank einen Satz von Geländedaten enthaltend, die feste, mit mindestens einer geografischen Region assoziierte Landmarken repräsentieren, und wobei Bestimmen der geschätzten Höhe umfasst:

Korrelieren mindestens einer der prognostizierten Höhen mit der zweiten Luftfahrzeugposition;

Zugreifen auf Geländehöhendaten aus der Datenbank korrespondierend mit der zweiten Luftfahrzeugposition; und

Addieren der Geländehöhendaten zu der mindestens einen prognostizierten Höhe,

wobei das Luftfahrzeug über einen assoziierten gespeicherten Flugplan verfügt,

wobei, wenn das Luftfahrzeug sich gemäß dem Flugplan fortbewegt, die zweite Komponente dann ein Flugmanagementsystem umfasst,

wobei, wenn das Luftfahrzeug sich nicht gemäß dem Flugplan fortbewegt, die zweite Komponente dann ein Trägheitsnavigationssystem umfasst.

**Revendications**

1. Procédé, comprenant les étapes consistant à :

recevoir, dans un premier intervalle de temps, en provenance d'un premier composant, un signal indiquant une altitude d'un aéronef (210) ;

recevoir, dans le premier intervalle de temps, en provenance d'un deuxième composant, un signal indiquant un premier cap de l'aéronef (220) ;

recevoir, dans le premier intervalle de temps, en provenance d'un troisième composant, un signal indiquant une première position de l'aéronef (230) ;

recevoir, dans un deuxième intervalle de temps ultérieur au premier intervalle de temps, en provenance des deuxième et troisième composants, des signaux indiquant respectivement un deuxième cap et une deuxième position de l'aéronef, un signal en provenance du premier composant n'étant pas reçu dans le deuxième intervalle de temps (240) ;

établir (280), en fonction des signaux reçus dans le deuxième intervalle de temps, une altitude estimée de l'aéronef ; et

établir, en fonction de l'altitude estimée, une altitude géométrique de l'aéronef,

le procédé étant **caractérisé en ce qu'**il comprend en outre les étapes consistant à :

établir, en fonction des signaux reçus des deuxième et troisième composants, plusieurs altitudes prédites de l'aéronef correspondant à plusieurs positions différentes de l'aéronef le long d'une trajectoire de vol de l'aéronef, l'altitude estimée étant fonction d'au moins une des altitudes prédites ;

mettre à jour, à une fréquence temporelle prédéfinie, des valeurs des altitudes prédites ; et enregistrer les valeurs des altitudes prédites dans un dispositif mémoire,

lequel dispositif mémoire comprend un tampon tridimensionnel,

lequel premier composant comprend un radioaltimètre.

2. Procédé selon la revendication 1, dans lequel les altitudes prédites sont établies à partir de la formulé :

$$Y = X \pm Z \tan \alpha'$$

où :

Y est l'altitude prédite ;
X est l'altitude actuelle estimée ;
$\dot{\alpha}$ est l'angle de vol de l'aéronef ; et
Z est une distance prédéfinie depuis la position actuelle de l'aéronef suivant l'angle de vol.

3. Procédé selon la revendication 1, dans lequel l'étape consistant à établir l'altitude estimée comprend les étapes consistant à :

corréler au moins une des altitudes prédites avec la deuxième position de l'aéronef ;
extraire des données d'altitude topographique de terrain correspondant à la deuxième position de l'aéronef ; et
ajouter les données d'altitude topographique de terrain à ladite au moins une altitude prédite.

4. Procédé selon la revendication 1, dans lequel :

l'aéronef possède un plan de vol enregistré qui lui est associé ;
si l'aéronef suit le plan de vol, le deuxième composant comprend alors un système de gestion de vol ; et
si l'aéronef ne suit pas le plan de vol, le deuxième composant comprend alors un système de navigation par inertie.

5. Système conçu pour être mis en oeuvre à bord d'un aéronef, le système comprenant :

un dispositif mémoire (511) ; et
un processeur (510) couplé au dispositif mémoire, le processeur étant conçu pour :

recevoir, dans un premier intervalle de temps, en provenance d'un premier composant, un signal indiquant une altitude de l'aéronef (210),
recevoir, dans le premier intervalle de temps, en provenance d'un deuxième composant, un signal indiquant un premier cap de l'aéronef (220),
recevoir, dans le premier intervalle de temps, en provenance d'un troisième composant, un signal indiquant une première position de l'aéronef (230),
recevoir, dans un deuxième intervalle de temps ultérieur au premier intervalle de temps, en provenance des deuxième et troisième composants, des signaux indiquant respectivement un deuxième cap et une deuxième position de l'aéronef, un signal en provenance du premier composant n'étant pas reçu dans le deuxième intervalle de temps (240),
établir, en fonction des signaux reçus dans le deuxième intervalle de temps, une altitude estimée de l'aéronef, et
établir (280), en fonction de l'altitude estimée, une altitude géométrique de l'aéronef,

le système étant **caractérisé en ce que** le processeur (510) est en outre conçu pour établir, en fonction des signaux reçus des deuxième et troisième composants, plusieurs altitudes prédites de l'aéronef correspondant à plusieurs positions différentes de l'aéronef le long d'une trajectoire de vol de l'aéronef, l'altitude estimée étant fonction d'au moins une des altitudes prédites,

lequel processeur est en outre conçu pour :

mettre à jour, à une fréquence temporelle prédéfinie, des valeurs des altitudes prédites ; et
enregistrer les valeurs des altitudes prédites dans le dispositif mémoire,

et lequel dispositif mémoire comprend un tampon tridimensionnel,
lequel premier composant comprend un radioaltimètre.

6. Système selon la revendication 5, dans lequel les altitudes prédites sont établies à partir de la formule :

$$Y = X \pm Z \tan \alpha'$$

où :

Y est l'altitude prédite ;
X est l'altitude actuelle estimée ;
$\overset{.}{\alpha}$ est l'angle de vol de l'aéronef ; et
Z est une distance prédéfinie depuis la position actuelle de l'aéronef suivant l'angle de vol.

7. Système selon la revendication 5, comprenant en outre une base de données couplée au dispositif mémoire, la base de données comportant un ensemble de données de terrain représentant des points de repère fixes associés à au moins une région géographique, et le processeur établissant l'altitude estimée en :

corrélant au moins une des altitudes prédites avec la deuxième position de l'aéronef ;
extrayant de la base de données des données d'altitude topographique de terrain correspondant à la deuxième position de l'aéronef ; et
ajoutant les données d'altitude topographique de terrain à ladite au moins une altitude prédite, lequel aéronef possède un plan de vol enregistré qui lui est associé ;
si l'aéronef suit le plan de vol, le deuxième composant comprenant alors un système de gestion de vol,
si l'aéronef ne suit pas le plan de vol, le deuxième composant comprenant alors un système de navigation par inertie.

FIG.1

EP 2 407 800 B1

$200$

START

```
RADIO
ALTIMETER
SENSOR
EGPWS
```
→
```
RECEIVE RADIO ALTIMETER CALIBRATED
ALTITUDE DATA FROM EGPWS / 3D
VOLUMETRIC ELEVATION BUFFER
```
$210$

```
FMS SENSOR/
INS-MEASURED
DATA ABOUT
ASCENT/DESCENT
ANGLE
```
→
```
RECEIVE DATA ABOUT ASCENT/DECENT
ANGLE (HEADING) FROM SENSOR
```
$220$

```
GPS
```
→
```
RECEIVE AIRCRAFT POSITION DATA
FROM GPS (GPS LATITUDE AND GPS
LONGITUDE)
```
$230$

```
INITIALIZE/UPDATE AIRCRAFT-POSITION
REFERENCE POINT
```
$240$

TO 250

FROM 290,300

FIG.2

250

SIGNAL PROCESSING
CALCULATE EFFECTIVE ALTITUDES 'Y1','Y2','Y3','Y4','Y5' USING THE RELATION
'Y=X ± tan α' where
X−CURRENT POSITION OF AIRCRAFT RECEIVED FROM EGPWS (RA CALIBRATED ALTITUDE)
Y−ESTIMATED HEIGHT
α−FLIGHT ANGLE (ASCENT OR DESCENT)
Z−(2 CELLS AWAY FROM THE CURRENT AIRCRAFT POSITION ALONG THE FLIGHT PATH ANGLE)
Y1,Y2..Y5−PREDICTED POSITIONS OF THE AIRCRAFT POPULATED IN THE CORRESPONDING
ALTERNATE CELLS (2 CELLS AWAY FROM THE PREVIOUS ESTIMATED POSITION) OF THE
3D VOLUMETRIC ELEVATION BUFFER)

260

YES ◁ IS RA DATA AVAILABLE? ▷

NO

270

1) EXTRACT THE HEIGHT INFORMATION STORED IN THE 3D VOLUMETRIC
ELEVATION BUFFER (AS 'X' FEET AGL).
2) CORRELATE THE GPS POSITION OF THE AIRCRAFT WITH THE EXTRACTED
HEIGHT INFORMATION.
3) EXTRACT TERRAIN ELEVATION DATA BASED ON THE GPS POSITION.
4) ADD THE TERRAIN ELEVATION DATA TO THE NEXT PREDICTED POSITION/
HEIGHT OF THE AIRCRAFT.

TO 290

TO 280

FIG.3

EP 2 407 800 B1

FROM 260    FROM 270      TO 210

*280*

DETERMINE GEOMETRIC
ALTITUDE

*290*

IS THE
AIRCRAFT IN THE
APPROACH/LANDING
PHASE?   NO

YES

*300*

DOES 'Y5'
CORRESPOND TO
THE VOXEL OF THE LAYER
CORRESPONDING TO DECISION
HEIGHT (DH) FOR VFR
CONDITIONS?   NO

YES

STOP

FIG.4

*555*

*550*

Z

64 FEET
128 LAYERS

X

64 FEET
128 VOXELS

*550*

64 FEET
128 VOXELS

Y

FIG.5

α

α

Y = X ± Z tan α

X

Z (2-VOXEL LENGTH)

FIG.6

FIG.7

FIG.8

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6216064 B
- US 5136512 A
- US 20080103691 A